# EUROPEAN PATENT APPLICATION

(11) **EP 1 925 641 A2**
(43) Date of publication of application: **28.05.2008**
(21) Application number: 07120648.6
(22) Date of filing: 14.11.2007
(51) Int. Cl.: C08L 89/00, C08J 3/12

(54) **Agglomerate composition and process for preparing an agglomerate composition**

(30) Priority: 24.11.2006 GB 0623375
(71) Applicant: Syral Belgium NV, 9300 Aalst (BE)
(72) Inventor: REDL, Andreas, 9300, AALST (BE)
(74) Representative: Ostyn, Frans

(57) **Abstract**

The invention relates to an agglomerate composition, comprising a liquid and a protein powder, at least one of the two ingredients being thermoreactive, and the composition not being cross-linked due to a thermoreaction, wherein the molecular size distribution of the composition is essentially the same as the molecular size distribution of the ingredients. The invention further relates to a process for preparing an agglomerate protein composition comprising a powder and a liquid, at least one of the two ingredients being thermoreactive, wherein the ingredients are mixed in a mixing device wherein the mixing leads to an evenly distribution of the liquid in the powder, and the mixture is subsequently subjected to an ageing process in an ageing device wherein the ageing particles do no come into contact with each other.

## Description

The invention relates to an agglomerate (=granulate) composition, comprising a liquid and a protein powder, the composition not being cross-linked due to a thermo-reaction (in other words not having a thermal history). The invention also relates to a process for preparing such an agglomerate composition and the use of such an agglomerate composition.

In the thermoplastic polymer industry, it is standard practice to use an intermediate polymer granulate material which may be available as a formulated composition that can be easily distributed during a final processing step, this instead of a corresponding powdery material.

Polyethylene or polypropylene pellets or granulates can be considered as a reference material which can be easily dosed during final thermo-processing procedures such as injection moulding, blow moulding and thermoforming.
In order to obtain these pellets or granulates, already a thermo-processing step is needed whereby the powder material is extruded and pellets or granulates are obtained.

By this it is clear that thermo-reactive polymers can not be transformed in such shelf and storage stable intermediates without modifying the physico-chemical properties of the original polymer.

The purpose of the invention is consequently to provide a shelf and storage stable intermediate product that can be further processed and shaped into thermo-forming equipment without having yet a thermal history.
Another purpose is to provide shelf and storage-stable intermediate products which contain at least one thermo-reactive polymer which is natural and biodegradable, such as a protein.

The purpose of the invention is on the one hand solved by providing an agglomerate composition, comprising a liquid and a protein powder, at least one of the two ingredients being thermo-reactive, and the composition not being cross-linked due to a thermo-reaction, wherein the molecular size distribution of the composition is essentially the same as the molecular size distribution of the ingredients.

In such a way, a shelf and storage stable agglomerate product is obtained that still can be further processed, this by means of a thermo-reaction process. The thermo-reaction process can be a moulding process, an extrusion process such as injection moulding or blow moulding, or a process wherein the composition is treated by microwaves.

This liquid ingredient may be obtained from a renewable or non-renewable source, while it may be biodegradable or not.

In a first embodiment of an agglomerate composition according to the invention, the liquid is a non-thermo-reactive material, in combination with a thermo-reactive powder.

In a second preferred embodiment of an agglomerate composition according to the invention, the liquid is a thermo-reactive material.

In a third preferred embodiment of an agglomerate composition according to the invention, the liquid is a combination of a thermo-reactive and a non-thermo-reactive material.

In the first and third embodiment, the non-thermo-reactive material is preferably a plasticizer. The plasticizer may be selected among the group of polyhydroxy alcohols including glycerol, propylene glycol, ethylene glycol, di-ethylene glycol or tri-ethylene glycol, glycerol being preferred.

In the second and third embodiment, with a thermo-reactive material there is meant monomeric compounds that will react with each other or with the protein powder at temperatures above 50°C. Examples of such materials are e.g. lower fatty acids, hydroxylamines, furfural, HMF, hydroxy acids, urea and mixtures thereof.

In a favorable agglomerate composition according to the invention, the composition comprises one or more of the ingredients chosen from fillers, colouring agents, fibres and vitamins.

In an advantageous agglomerate composition according to the invention, the agglomerate composition is in a granular form wherein at least 90% of the particles have a diameter between 1 and 10 mm, and in that the granulate has a water activity < 0,8.

In a more advantageous agglomerate composition according to the invention, the agglomerate composition has a particle size distribution amounting to
- from 50 - 90 w/w % particles < 5 mm;
- from 10 - 40 w/w % particles between 5 and 10 mm; and
- less than 10 w/w % particles > 10 mm.

In a still more advantageous agglomerate composition according to the invention, the agglomerate composition is in a granular form having a particle size distribution amounting to
- from 75 - 90 w/w % particles < 5 mm;
- from 5-20 w/w % particles between 5 and 10 mm; and
- less than 5 w/w % particles > 10 mm.

A further problem of the synthetic intermediate polymer granulate or pellet material, is that nowadays, there is a growing demand from both citizens and governmental institutions for environmentally safe products and processes. In this respect, a specific advantage of biopolymers compared to synthetic polymers is their biodegradability and the fact that these polymers are derived from renewable agricultural feed stocks.

Such biodegradable, thermoplastic compositions have already been extensively described in the state of the art. A lot of documents are related to starch-based biodegradable compositions, but also to biodegradable polyesters such as PLA and PHB-PBV. Also quite some documents refer to the use of proteins as a component of biodegradable compositions.

US 5,523,293 for instance discloses a biodegradable, thermoplastic composition made of the reaction product of soybean and comprising a carbohydrate filler, a reducing agent, a plasticizer, water, and optional additives.

Also in GB 1 261 299, shaped articles, such as flat and tubular films, are described that are made by extruding into a gaseous medium a plastic mass consisting of an aqueous composition containing a proteinaceous substance having a protein content of at least 65% by wt., at least 50% of which is a particulate, non-heatcoagulable simple protein. The mass, at elevated temperature, may be extruded as a tube into ambient air, and the tube stretched by inflation. The inflating agent may contain a flavour, e.g. hickory smoke. Alternatively, the tube may be flavoured or plasticized (e.g. using an aqueous or aqueous alcoholic solution of glycerol) after extrusion. Such tubes make useful sausage casings.

Also plasticized wheat gluten compositions have already been described in the state of the art as a biodegradable, thermoplastic composition.

In EP 929 230, a process is described for the formation of a plasticized proteinaceous material, in which a plasticizer component is selectively matched with a protein component to form a blend. The blend is heated under controlled shear conditions to produce the plasticized proteinaceous material having the plasticizer component uniformly distributed within the protein component. The plasticized proteinaceous material is used for a variety of purposes including the production of gums and confectionery compositions.

In EP 1066759, a digestible degradable gluten composition is described that can be stored for a prolonged period of time without degradation. This is realised by developing vital wheat gluten in a non-aqueous medium (i.e. a medium having Aw < 0,8). In a typical preparation the kneading of the gluten and plasticizer is performed at a temperature between 50 °C and 90 °C. The thus plasticized gluten is then immediately transformed in the desired shape for use as a gum base for chewing gum or as chewy candy. Other uses cited in the application are pet foods, fish feed and processed food.

In JP 05017591, it is described that wheat gluten and glycerol is mixed to homogeneity by a mixer, roll kneaded and press formed to obtain a shaped material. As mentioned in this application, this shape can be e.g. a sheet, a string or a container.

Plasticized wheat gluten compositions containing reduced plasticizer content, in combination with good plastic elasticity allowing easy transformation are described US 2,586,675. The plasticized mass according to the disclosed batch process has the consistency of a thick dough maintaining plastic elasticity, and can be easily divided and shaped.

The above cited examples all have in common that the protein material and the plasticizer are first processed to obtain a plasticized dough-like intermediate composition. This dough-like intermediate is then immediately transformed into its final shape. Depending on the processing conditions, well determined but variable mechanical properties can be realised. These properties may vary from plastic and deformable (e.g. in chewing gum and chewy candy pieces) to rubber-elastic and highly extensible (e.g. in films or containers, etc). Thereby it is clear that this dough-like intermediate is not suitable to be stored for longer periods. This negatively affects the flexibility of the final shaping process.

The problem of the invention is consequently to provide a biodegradable, storage-stable agglomerate composition according to the invention.

The solution to this problem is solved by providing an agglomerate composition according to the invention, wherein the powder is a protein powder.

In a preferred embodiment of an agglomerate composition according to the invention, the protein powder is a gluten powder, more preferably a wheat gluten powder.

On the other hand, the purpose of the invention is solved by providing a process for preparing an agglomerate protein composition comprising a powder and a liquid, at least one of the two ingredients being thermo-reactive, wherein the ingredients are mixed in a mixing device wherein the mixing leads to an evenly distribution of the liquid in the powder, and the mixture is subsequently subjected to an ageing process in an ageing device wherein the ageing particles do no come into contact with each other.

The process according to the invention thus prevents dough-like formation, and provides a shelf and storage stable, further processable agglomerate product.

Typical mixing devices suitable for evenly distributing the liquid in the powder are low energy input mixers, such as e.g. paddle mixers.

The ageing process, following the mixing step, may be performed in a fluidised bed equipment.

In an advantageous way, during the ageing process, a controlled quantity of protein powder material can then be sprayed on the particles in order to further stabilise them.

This invention will now be illustrated by the following example which should be considered as being not limiting to the scope of the invention as such and as expressed in the following claims.

### Example

1 kg gluten and 0.5 kg glycerol anhydrous are mixed in a Hobart mixer at speed setting 1 during 3 minutes. This mixture is then loaded into a Glatt agglomerator. The air setting of this agglomerator are set in pulsating mode. In total, 3 batches are loaded to the Glatt agglomerator (in total 4.5 kg of material). The agglomerator is put 1.5 hour in semi pulsation mode. After taking out the quite sticky material of the agglomerator, 500 g dry gluten is added and mixed gently by hand. Thereafter, the composition is sieved. The following particle size distribution is obtained:
- 0.5 kg with a particle size of more than 10 mm;
- 1.4 kg with a particle size of more than 5 mm;
- 3 kg with a particle size between 1 and 5 mm.

It is observed that after 24 hours, the obtained granulates are not sticky and can be further processed into an injection moulding machine (Arburg 320 S) in order to obtain a moulded end product.

## Claims

1. Agglomerate composition, comprising a liquid and a protein powder, at least one of the two ingredients being thermoreactive, and the composition not being cross-linked due to a thermoreaction, **characterised in that** the molecular size distribution of the composition is essentially the same as the molecular size distribution of the ingredients.

2. Agglomerate composition according to claim 1, **characterised in that** the liquid is a non-thermoreactive material, in combination with a thermo-reactive powder.

3. Agglomerate composition according to claim 1, **characterised in that** the liquid is a thermo-reactive material.

4. Agglomerate composition according to claim 1, **characterised in that** the liquid is a combination of a thermo-reactive and a non-thermoreactive material.

5. Agglomerate composition according to any one of claims 2 or 4, **characterised in that** the non-thermoreactive material is a plasticizer.

6. Agglomerate composition according to claim 5, **characterised in that** the plasticizer is selected among the group of polyhydroxy alcohols including glycerol, propylene glycol, ethylene glycol, di-ethylene glycol or tri-ethylene glycol.

7. Agglomerate composition according to claim 6, **characterised in that** the plasticizer is glycerol.

8. Agglomerate composition according to claims 3 or 4, **characterised in that** the thermo-reactive liquid material is selected among lower fatty acids, hydroxylamines, furfural, HMF, hydroxyl acids, urea and mixtures thereof.

9. Agglomerate composition according to any one of the preceding claims, **characterised in that** the composition comprises one or more of the ingredients chosen from fillers, colouring agents, fibres and vitamins.

10. Agglomerate composition according to any one of the preceding claims, **characterised in that** the agglomerate composition is in a granular form wherein at least 90% of the particles have a diameter between 1 and 10 mm, and **in that** the granulate has a water activity < 0,8.

11. Agglomerate composition according to claim 10, **characterised in that** the agglomerate composition has a particle size distribution amounting to
- from 50 - 90 w/w % particles < 5 mm;
- from 10 - 40 w/w % particles between 5 and 10 mm; and
- less than 10 w/w % particles > 10 mm.

12. Agglomerate composition according to claim 11, **characterised in that** the agglomerate composition is in a granular form having a particle size distribution amounting to
- from 75 - 90 w/w % particles < 5 mm;
- from 5-20 w/w % particles between 5 and 10 mm; and
- less than 5 w/w % particles > 10 mm.

13. Agglomerate composition according to any one of claims 1 to 12, **characterised in that** the powder is a protein powder.

14. Agglomerate composition according to claim 13, **characterised in that** the protein powder is a gluten powder.

15. Agglomerate composition according to claim 14, **characterised in that** the gluten powder is a wheat gluten powder.

16. A process for preparing an agglomerate protein composition comprising a powder and a liquid, at least one of the two ingredients being thermoreactive,
**characterised in that** the ingredients are mixed in a mixing device wherein the mixing leads to an evenly distribution of the liquid in the powder, and the mixture is subsequently subjected to an ageing process in an ageing device wherein the ageing particles do no come into contact with each other.

17. A process according to claim 16, **characterised in that** the mixing device is a low energy input mixer.

18. A process according to claim 16 or 17, **characterised in that** the ageing process, following the mixing step, is performed in a fluid bed equipment.

19. A process according to any one of claims 16 to 18, **characterised in that** during the ageing process, a controlled quantity of protein powder material is sprayed on the particles in order to further stabilise them.

20. A process according to any one of claims 16 to 19, **characterised in that** the process is provided for preparing an agglomerate composition according to any one of claims 1 to 15.
